# EUROPÄISCHE PATENTSCHRIFT

(11) **EP 1 318 929 B1**
(45) Veröffentlichungstag und Bekanntmachung des Hinweises auf die Patenterteilung: **21.12.2005**
(21) Anmeldenummer: 01985243.3
(22) Anmeldetag: 17.09.2001
(51) Int. Cl.: B60R 16/02

(54) **DICHTE ELEKTRISCHE LEITUNGSDURCHFÜHRUNG UND VERFAHREN ZU DEREN HERSTELLUNG**
SEALED ELECTRICAL CABLE DUCT AND METHOD FOR PRODUCTION THEREOF
TRAVERSEE ELECTRIQUE ETANCHE ET PROCEDE POUR SA FABRICATION

(30) Priorität: 22.09.2000 EP 00120778
(43) Veröffentlichungstag der Anmeldung: 18.06.2003
(73) Patentinhaber: SIEMENS AKTIENGESELLSCHAFT, 80333 München (DE)
(72) Erfinder: PUCHEGGER, Karl, A-2630 Ternitz (AT)
(86) Internationale Anmeldenummer: PCT/EP2001/010748
(87) Internationale Veröffentlichungsnummer: WO 2002/024485

(56) Entgegenhaltungen:
- WO-A-99/52743
- US-A- 5 380 955
- US-A- 5 491 300

## Beschreibung

Die Erfindung bezieht sicht auf eine dichte elektrische Leitungsdurchführung gemäß Patentanspruch 1 und ein Verfahren zu deren Herstellung gemäß Patentanspruch 7.

In Kraftfahrzeugen, insbesondere bei Getriebemotor-Antrieben für Fensterheber- bzw. Schiebedächer oder dergleichen, besteht zunehmend die Anforderung, eine in einem Gehäuse untergebrachte Steuerelektronik am Motor und/oder Getriebe anzubringen und zu verbinden. Dabei muss die auf einen Schaltungsträger aufgebrachte Steuerelektronik gegenüber den in Motoren und Getrieben verwendeten Ölen, die chemisch höchst aggressive Additive enthalten, abgeschirmt werden. Zugleich müssen aber elektrische Leitungen durch die Abschirmung hindurchgeführt werden, um Komponenten des Motors oder des Getriebes über die Steuerelektronik steuern und versorgen zu können.

Eine Verbindungsanordnung, die für derartige Bedingungen an sich tauglich ist, ist aus der Patentschrift EP 0 513 263 B1 bekannt. Eine flexible Folie, die Leiterbahnen trägt, ist zwischen einem Verschlussträger und einem Gehäuse hindurchgeführt und stellt eine elektrische Verbindung zwischen einem Bauteil im Inneren des Gehäuses und einem Bauteil außerhalb des Gehäuses her. Um eine Abdichtung zwischen der flexiblen Folie und dem Verschlussteil oder dem Gehäuse zu erzielen, muss die flexible Folie mit einer Dichtung umgeben werden. Die Abdichtung des Verschlussteils gegenüber dem Gehäuse und der Folie ist dabei verhältnismäßig aufwendig bzw. nicht mit Sicherheit in allen Fällen gewährleistbar.

Zur Vereinfachung des Fertigungs- und Montageprozesses ist es durch die DE 197 42 178 C1 bekannt, den Leiterbahnträger unmittelbar in die Gehäusewand einzuspritzen, durch welche die Leiterbahnen hindurch zuführen sind; dabei können Probleme durch eine zu hohe Wärmebelastung des Trägermaterials entstehen, die u.U. teilweise durch Wahl eines entsprechend wärmefesteren, jedoch kostenintensiveren Materials, wie z.B. Polyamid, umgangen werden könnten.

Weiterhin ist aus der US 5,491,300 ein Durchführungs-Bauteil für flexible Leiterelemente bekannt, das eine abgedichtete Durchführung der Leiterelemente durch eine Trennwand, zum Beispiel eines Gehäuses, gewährleistet. Dieses Durchführungs-Bauteil besteht aus einer Vielzahl von einzelnen Bauteilen, die zusammen mit den Leiterelementen in aufwändiger Weise zu einem Bauteil montiert werden müssen. Dies ist insbesondere für die Produktion in großen Stückzahlen ungeeignet, da schwer automatisierbar und somit sehr arbeitsintensiv und teuer.

Gemäß Aufgabe vorliegender Erfindung soll mit geringem Material- und Fertigungsaufwand eine Leitungsdurchführung durch die Wand eines Gehäuses geschaffen werden, die eine zuverlässige, auch bei langen Betriebsstandzeiten noch wirksame Abdichtung des, mit einem Gehäusedeckel zu verschließenden, Gehäuses gewährleistet.

Diese Aufgabe kann erfindungsgemäß durch eine dichte Leitungsdurchführung gemäß Anspruch 1 bzw. ein Verfahren zu deren Herstellung gemäß Patentanspruch 7 erreicht werden; vorteilhafte Ausgestaltungen der Leitungsdurchführung sind Gegenstand der Ansprüche 2 bis 6.

Bei der Herstellung der erfindungsgemäßen Leitungsdurchführung kann einerseits die Massetemperatur des Dichtungsmaterials niedriger gehalten werden als die des zuvor spritzgießbaren Gehäuses und dadurch ein kostengünstiges Termoplast-Material niedrigerer Temperaturfestigkeit gewählt und andererseits eine hohe Dichtigkeit zwischen einem öffnungsseitigen Gehäuserand und einem aufzulegenden Gehäusedeckel gewährleistet werden ,da die zwischenliegende Dichtungsauflage wegen des Fehlens der in einer eigenen gesonderten Durchführungsöffnung eingegossenen Leiterbahnen über ihre gesamte Dichtfläche eine hohe Homogenität aufweist; durch die Möglichkeit der gleichzeitigen Ein- bzw. Anspritzung des Leiterbahnträgers und der Dichtung oder der Dichtungsauflage in einem Prozessschritt sowie der Spritzmöglichkeit des formenkomplizierten Gehäuses ohne gleichenzeitiges Einspritzen des insbesondere offenbart die US 5,491,300 ein Durchführungsbauteil für eine dichte Leitungsdurchführung durch eine Wand mit elektrische Leiterbahnen, die sind nach Art eines Folienleiters in einen flexiblen Leiterbahnträger eingebettet ist, der Leiterbahnträger ist durch eine eigene Durchführungsöffnung des Gehäuses abgedichtet durchgeführt; zur Abdichtung zwischen dem Gehäuse und dem durchgesteckten Leiterbahnträger ist eine einerseits dicht an dem Leiterbahnträger und andererseits an dem Gehäuserand der Durchführungsöffnung anliegenden Leiterbahnträger-Dichtung vorgesehen.

Leiterbahnträgers ergibt sich eine wesentliche, insbesondere für eine Automatenfertigung eines Massenserienartikels vorteilhafte, Minderung des Fertigungsaufwandes.

Die Erfindung sowie weitere vorteilhafte Ausgestaltungen der Erfindung gemäß Merkmalen der Unteransprüche werden im folgenden anhand schematischer Ausführungsbeispiele in der Zeichnung näher erläutert; darin zeigen:
- FIG 1: in perspektivischer Darstellung ein topfförmiges Elektronikgehäuse mit aus dessen nach oben gerichte- ter Bodenfläche durch eine Durchführungsöffnung dich- tend herausgeführtem Leiterbahnträger mit eingebette- ten Leiterbahnen;
- FIG 2: in perspektivischer Darstellung das topfförmige Elek- tronikgehäuse gemäß FIG 1 mit nach oben gerichteter Topfrandseite mit Dichtungsauflage zur Abdichtung ge- genüber einem zum dichten Verschluss auflegbaren Gehäusedeckel;
- FIG 3: die Draufsicht auf das Elektronikgehäuse gemäß FIG 1;2;
- FIG 4: ein Schnittbild des Elektronikgehäuses gemäß Schnitt- verlauf IV-IV.

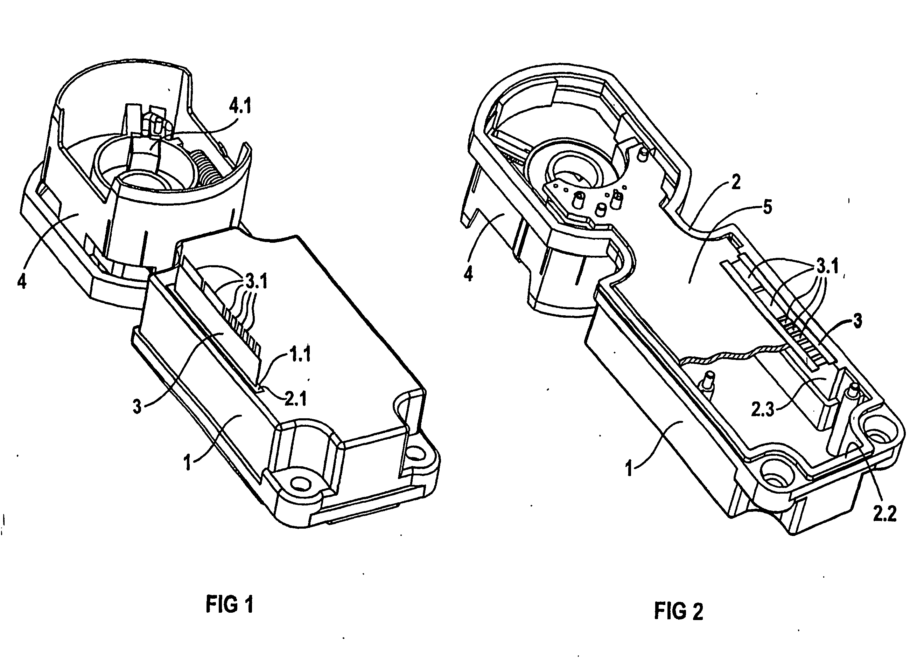

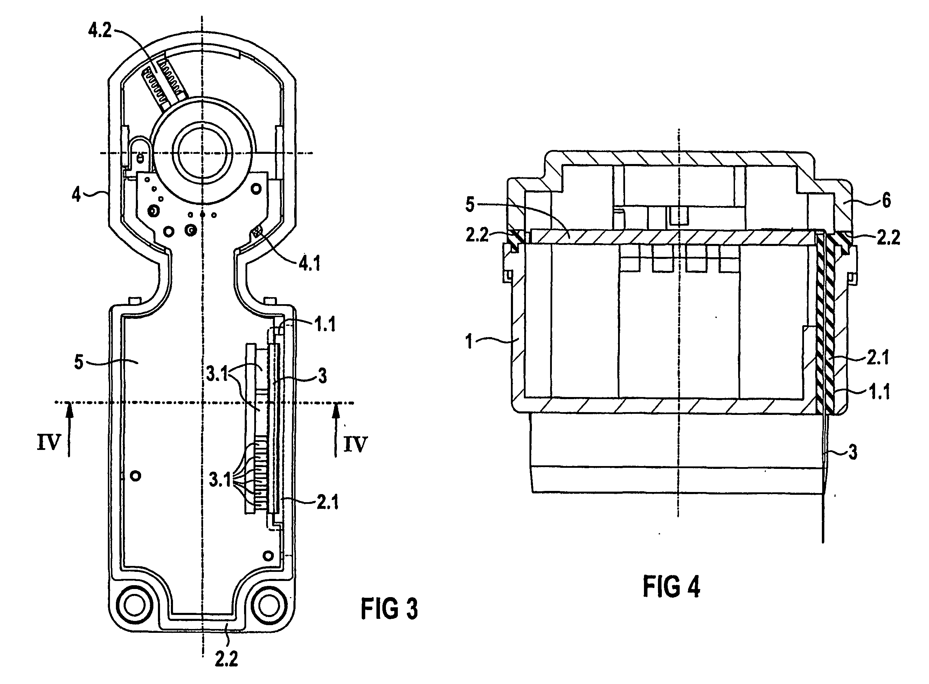

FIG 1 bis 4 zeigen ein topfförmiges aus einem Polyamid-Kunststoff gespritztes Gehäuse 1 zur Aufnahme einer Steuerelektronik, die von einer ausschnittsweise angedeuteten, innerhalb des Gehäuses 1 fixierten Leiterplatte 5 aufgenommen wird. Mit dem Gehäuse 1 ist eine Bürstentraganordnung 4 mit darin angeordneten Bürsten 4.1;4.2 einstückig verbunden, in deren Inneres die Leiterplatte 5 teilweise hineinreicht; diese Bauteileinheit ist in aus der EP 0 616 659 B1 an sich bekannter Art zwischen den axial voreinander liegenden Stirnseiten des Motorgehäuses eines Kommutatormotors einerseits und eines Getriebegehäuses eines Schneckengetriebes andererseits angeordnet. Diese Anordnung ist derart gestaltet dass im Bereich des Kommutators die Bürstentraganordnung durch Motorgehäuse und Getriebegehäuse nach außen umschlossen und das die Steuerelektronik aufnehmende Gehäuse 1 durch einen auf seinen Gehäuse-Topfrand aufgelegten getriebeseitigen Gehäusedeckel 6 dicht verschlossen ist. Zum dichten Abschluss der dazu aufeinanderliegenden Bauteile ist eine einstückige randseitig auf das Gehäuse aufgespritzte Dichtungsauflage 2.2 einer Dichtung 2 vorgesehen.

Zur Kontaktierung zwischen der Leiterplatte 5 und damit der in dem Hohlraum des Gehäuses 1 aufgenommenen Steuerelektronik einerseits und einem äußeren Versorgungsanschluss andererseits dienen in einen flexiblen Leiterbahnträger 3 eingebettete Leiterbahnen 3.1 Diese Leiterbahnen 3.1 sind mit gehäuseinneren, in die Kontaktebene der Leiterplatte 5 abgewinkelten Kontaktstellen an die Leiterplatte 5 angeschlossen und führen mit gehäuseäußeren Kontaktstellen z.B. zu einem hier nicht gezeigten kundenseitigen Steckeranschluss.

Zur dichten elektrischen Durchführung der Leiterbahnen 3.1 vom Inneren des Gehäuses 1 nach außen dient eine gesonderte, außerhalb des Bereichs der Dichtungsauflage 2.2 vorgesehene Durchführungs-Öffnung 1.1 in der Bodenfläche des topfförmigen Gehäuses 1 und in Nähe dessen einer Gehäuse-Seitenwand; in diese Durchführungs-Öffnung 1.1 ist der durchgesteckte flexible Leiterbahnträger 3 mit den darin nach Art eines Folienleiters eingebetteten Leiterbahnen 3.1 mit einer Leiterbahnträger-Dichtung 2.1 aus einem Thermoplast-Werkstoff eingespritzt.

Nach einer Ausgestaltung der Erfindung ist der Leiterbahnträger 3 mit den eingebetteten Leiterbahnen 3.1 innerhalb des Gehäuses 1 entlang der einen, der Durchfürungs-Öffnung 1.1 nahen Gehäuseseitenwand geführt gehalten. Die erfolgt mitttels einer angespritzten Dichtungs-Erweiterung 2.3. In dem Bereich bis zu dem abgewinkelten Kontaktierungsende an der Leiterplatte 5.

Zweckmäßigerweise sind die Leierbahnträger-Dichtung 2.1 und die randseitigen Dichtungs-Auflage 2.2 sowie gegebenenfalls die Dichtungs-Erweiterung 2.3 in einem Arbeitsgang als einstückige Dichtung 2 spritzgegossen.

Ein vorteilhaftes Verfahren zur Herstellung der erfindungsgemäßen Leitungsdurchführung ist durch folgende Verfahrensschritte gekennzeichnet:
- Herstellen, insbesondere Spritzen, des Gehäuses mit der eigenen, zur Durchführung des Leiterbahnträgers vorgesehenen Durchführungs-Öffnung und der durch den Gehäusedeckel unter Zwischenlage einer Dichtungs-Auflage verschließbaren Gehäuseöffnung;
- Durchstecken des Leiterbahnträgers durch die Durchführungs-Öffnung des Gehäuses;
- Spritzen der Leiterbahnträger-Dichtung als Umspritzung der Leiterbahnen und Anspritzung an das Gehäuse im Bereich des Gehäuserandes der Durchführungs-Öffnung sowie der Dichtungsauflage an das Gehäuse im Bereich seines zur Auflage des Gehäusedeckels vorgesehenen Gehäuserandes.

Zusammenfassend ist festzustellen:
Zur Minderung des Material- und Fertigungsaufwandes für eine dichte elektrische Leitungsdurchführung durch die Wandung eines Gehäuses 1 sind elektrische Leiterbahnen 3.1 in einem flexiblen Leiterbahnträger 3 aus Polyster-Werkstoff eingebettet; der Leiterbahnträger 3 ist über eine Leiterbahnträger-Dichtung 2 aus einem Thermoplast-Werkstoff in einer eigenen Durchführungs-Öffnung 1.1 in der Wandung des aus einem Polyamid-Werkstoff gefertigten Gehäuses 1 eingespritzt.

## Patentansprüche

1. Dichte elektrische Leitungsdurchführung durch die Wand eines Gehäuses (1) welches eine Steuerelektronik aufnimmt, mit den Merkmalen:
- das Gehäuse (1) weist ein topfförmiges Elektronikgehäuse und einen zum dichten Verschluss aufgelegten Gehäusedeckel (6) auf,
- elektrische Leiterbahnen (3.1) sind nach Art eines Folienleiters in einen flexiblen Leiterbahnträger (3) aus einem Polyester-Werkstoff isoliert eingebettete;
- der Leiterbahnträger (3) ist durch eine eigene Durchführungs-Öffnung (1.1) des Gehäuses (1) abgedichtet durchgeführt;
- zur Abdichtung zwischen dem Gehäuse (1) und dem durchgesteckten Leiterbahnträger (3) ist eine spritzgegossene, einerseits dicht an dem Leiterbahnträger (3) und andererseits an dem Gehäuserand der Durchführungs-Öffnung (1.1) anliegende an-oder eingespritzte Leiterbahnträger-Dichtung (2) aus einem Thermoplast-Werkstoff vorgesehen.

2. Dichte elektrische Leitungsdurchführung nach Anspruch 1 mit einem das Gehäuse (1) unter Zwischenlage einer Dichtungs-Auflage (2.2) abschließenden Gehäusedeckel (6) mit dem Merkmal:
- die Durchführungs-Öffnung (1.1) zur Durchführung des Leiterbahnträgers (3) liegt außerhalb des Bereichs der zwischen dem Gehäuse (1) und dem Gehäusedeckel zwischengelegten Dichtungsauflage (2.2).

3. Dichte elektrische Leitungsdurchführung nach zumindest einem der Ansprüche 1 oder 2 mit dem Merkmal:
- der Leiterbahnträger (3) ist innerhalb des Gehäuses (1) auch außerhalb seiner eigenen Durchführungs-öffnung (1.1) über eine angespritzte Dichtungs-Erweiterung (2.3) an der Gehäuse seitenwand (1) fixiert.

4. Dichte elektrische Leitungsdurchführung nach Anspruch 2 oder 3 mit dem Merkmal :
- die Leiterbahnträger-Dichtung (2.1) und die Dichtungs-Auflage (2.2) sowie gegebenenfalls die Dichtungs-Erweiterung (2.3) sind Bestandteil einer einstückig um- oder angespritzten Dichtung (2) aus einem Thermoplast-Werkstoff.

5. Verfahren zur Herstellung einer dichten elektrischen Leitungsdurchführüng durch die Wand eines Gehäuses (1), welches eine Steuerelektronik aufnimmt, wobei
- das Gehäuse ein toppförmiges Elektronikghäuse und einen zumn dichten Verschluss aufgelegten Gehäusedeckel (6) aufweist,
- elektrische Leiterbahnen (3.1) nach Art eines Folienleiters in einen flexiben Leiterbahnträger (3) aus einem Polyester-Werkstoff isoliert eingebettet sind,
- der Leiterbahnträger (3) durch eine eigene Durchführungs-Öffnung (1.1) des Gehäuses (1) abgedichet durchgeführt ist und
- zur Abdichtung zwischen dem Gehäuse (1) und dem durchgesteckten Leiterbahnträger (3) eine spritzgegossene einerseits dicht an dem Leiterbahnträger (3) und andererseits an dem Gehäuserand der Durchführungs-Öffnung (1.1) an- oder eingespritzte Leiterbahnträger-Dichtung (2) aus einem Thermoplast-Werkstoff vorgesehen ist,
mit folgenden Verfahrensschritten:
- Herstellen, insbesondere Spritzen, des Gehäuses mit der eigenen, zur Durchführung des Leiterbahnträgers vorgesehenen Durchführungs-Öffnung und der durch den Gehäusedeckel unter Zwischenlage einer Dichtungs-Auflage verschließbaren Gehäuseöffnung;
- Durchstecken des Leiterbahnträgers durch die Durchführungs-öffnung des Gehäuses;
- Spritzen der Leiterbahnträger-Dichtung als Umspritzung der Leiterbahnen und Anspritzung an das Gehäuse im Bereich des Gehäuserandes der Durchführungs-Öffnung sowie der Dichtungsauflage an das Gehäuse im Bereich seines zur Auflage des Gehäusedeckels vorgesehenen Gehäuserandes. durch die Wand eines Gehäuses (1),

## Claims

1. Sealed electric cable duct through the wall of a housing (1), said housing (1) holding an electronic control system, with the features:
- the housing (1) has a pot-type electronics housing and a housing cover (6) positioned to provide a sealed closing system,
- electric conductors (3.1) are embedded in an insulated fashion in the manner of a film conductor in a flexible conductor support (3) made of a polyester material,
- the conductor support (3) is passed through its own duct opening (1.1) in the housing (1) in a sealed fashion,
- an injection-moulded conductor support seal (2) injected onto or into the conductor support (3) on the one hand and the housing edge of the duct opening (1.1) on the other hand, in both instances in a sealed manner, and made of a thermoplastic material is provided as a seal between the housing (1) and the conductor support (3) passing through it.

2. Sealed electric cable duct according to claim 1,
with a housing cover (6) sealing off the housing (1) with an intermediate sealing layer (2.2), with the feature:
- the duct opening (1.1) for passage of the conductor support (3) is outside the area of the intermediate sealing layer (2.2) inserted between the housing (1) and the housing cover.

3. Sealed electric cable duct according to at least one of claims 1 or 2 with the feature:
- the conductor support (3) is fixed to the side wall of the housing (1) by means of an extended seal (2.3) applied by injection within the housing (1) and outside its own duct opening (1.1).

4. Sealed electric cable duct according to claim 2 or 3 with the feature:
- the conductor support seal (2.1) and the sealing layer (2.2) and also in some instances the extended seal (2.3) are elements of a seal (2) made of a thermoplastic material applied by injection round or to said elements and forming a single part therewith.

5. Method for producing a sealed electric cable duct through the wall of a housing (1), said housing (1) holding an electronic control system, with
- the housing having a pot-type electronics housing and a housing cover (6) positioned to provide a sealed closing system,
- electric conductors (3,1) being embedded in an insulated fashion in the manner of a film conductor in a flexible conductor support (3) made of a polyester material,
- the conductor support (3) being passed through its own duct opening (1.1) in the housing (1) in a sealed fashion and
- an injection-moulded conductor support seal (2) injected onto or into the conductor support (3) on the one hand and the housing edge of the duct opening (1.1) on the other hand, in both instances in a sealed manner, and made of a thermoplastic material being provided as a seal between the housing (1) and the conductor support (3) passing through it, with the following method steps:
- production, in particular injection, of the housing with its own duct opening provided for passage of the conductor support and housing opening that can be closed by the housing cover with an intermediate sealing layer inserted between;
- insertion of the conductor support through the duct opening in the housing,
- injection of the conductor support seal round the conductors and onto the housing in the area of the edge of the housing of the duct opening and injection of the sealing layer onto the housing in the area of its edge provided to hold the housing cover.

## Revendications

1. Passage étanche de conducteur électrique au travers de la paroi d'un boîtier (1), qui reçoit une électronique de commande, comportant les caractéristiques:
- le boîtier (1) présente un boîtier électronique en forme de pot et un couvercle de boîtier (6) placé sur lui pour réaliser une fermeture étanche,
- des barrettes de conducteurs électriques (3.1) étant enrobées en étant isolées, à la façon d'un conducteur en bande, dans un support flexible (3) de barrettes de conducteurs électriques,
- le support (3) de barrettes de conducteurs traversant de façon étanche, l'ouverture propre de passage (1.1) du boîtier (1), et
- pour assurer l'étanchéité entre le boîtier (1) et le support (3) de barrettes de conducteurs traversant, il est prévu un joint d'étanchéité (2) du support (3) de barrettes de conducteurs, en matériau thermoplastique, appliqué par projection ou injecté, d'un côté, de façon étanche, contre le support (3) de barrettes de conducteurs et, de l'autre côté, contre la bordure du boîtier de l'ouverture de passage (1.1).

2. Passage étanche de conducteurs électrique suivant la revendication 1, comportant un couvercle de boîtier (6) fermant le boîtier (1) avec intercalation d'un siège de joint d'étanchéité (2.2), avec la caractéristique:
- l'ouverture de passage (1.1) pour le passage du support (3) de barrettes de conducteurs est située en dehors de la zone du siège de joint d'étanchéité (2.2) intercalé entre le boîtier (1) et le couvercle de boîtier.

3. Passage étanche de conducteur électrique suivant au moins l'une des revendication 1 ou 2, comportant la caractéristique:
- le support (3) de barrettes de conducteurs électriques est fixé contre la paroi latérale du boîtier (1), à l'intérieur du boîtier (1) et également en dehors de son ouverture propre de passage (1.1), au-dessus d'un prolongement (2.3) du joint d'étanchéité (1.1) appliqué par injection.

4. Passage étanche de conducteur électrique suivant la revendication 2 ou la revendication 3, comportant la caractéristique:
- le joint d'étanchéité (2.1) du support de la bande de conducteurs et le siège du joint d'étanchéité (2.2), ainsi que, le cas échéant, le prolongement (2.3) du joint d'étanchéité sont des composants d'un joint d'étanchéité (2) en matériau thermoplastique injecté, d'une seule pièce, autour de lui ou contre lui.

5. Procédé de fabrication d'un passage étanche de conducteur électrique au travers de la paroi d'un boîtier (1), qui reçoit une électronique de commande,
- le boîtier présentant un boîtier électronique en forme de pot et un couvercle de boîtier (6) déposé sur lui pour réaliser une fermeture étanche,
- des barrettes de conducteurs électriques (3.1) étant enrobées en étant isolées, à la façon d'un conducteur en bande, dans un support flexible (3) de barrettes de conducteurs électriques,
- le support (3) de barrettes de conducteurs électriques traversant avec étanchéité la propre ouverture de passage (1.1) du boîtier (1), et
- pour l'étanchéité entre le boîtier (1) et le support de barrettes de conducteurs (3) intercalé, un joint d'étanchéité (2) du support de barrettes de conducteurs étant prévu, en matériau thermoplastique (3), appliqué par projection ou injecté, d'un côté, de façon étanche, contre le support (3) de barrettes de conducteurs électriques et, de l'autre côté, contre la bordure du boîtier de l'ouverture de passage (1.1),
comportant les étapes de procédé suivantes :
- fabriquer, en particulier injecter, le boîtier avec son ouverture propre de passage prévue pour réaliser le passage du support de barrettes de conducteurs et l'ouverture du boîtier, pouvant être fermée par le couvercle de boîtier avec intercalation d'un siège de joint d'étanchéité;
- faire traverser le support de barrettes de conducteurs au travers de l'ouverture de passage du boîtier;
- injecter le joint d'étanchéité du support de barrettes de conducteurs, sous la forme d'un enrobage par injection des barrettes de conducteurs, et injecter par projection contre le boîtier, dans la zone du bord de boîtier de l'ouverture de passage, ainsi que dans la zone du siège du joint d'étanchéité, contre le boîtier, dans la zone de son bord de boîtier prévu pour le siège du couvercle de boîtier.
